(19) Europäisches Patentamt
European Patent Office
Office européen des brevets

(11) **EP 4 071 366 A1**

(12) **EUROPEAN PATENT APPLICATION**

(43) Date of publication:
**12.10.2022 Bulletin 2022/41**

(21) Application number: **21166970.0**

(22) Date of filing: **06.04.2021**

(51) International Patent Classification (IPC):
*F04D 27/02* (2006.01)   *F04D 19/02* (2006.01)
*F02C 9/18* (2006.01)

(52) Cooperative Patent Classification (CPC):
**F04D 27/0215; F02C 9/18; F04D 19/02;**
**F04D 27/0223;** F05D 2270/101; F05D 2270/304

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Siemens Energy Global GmbH & Co. KG**
**81739 München (DE)**

(72) Inventor: **Axelsson, Sven**
**61234 Finspång (SE)**

(54) **METHOD TO OPERATE A COMPRESSOR**

(57)    The invention is about a method to operate a compressor of a gas turbine. The compressor comprises an inlet guide vane and upstream guide vanes and middle guide vanes and downstream guide vanes. An air extraction is arranged between the upstream guide vanes and the middle guide vanes, wherein the flow is controlled by a bleed valve. The compressor has a nominal speed $\Omega NS$ of the rotor and a specific stall speed $\Omega SS$. These speeds define an operating range OR. At the nominal speed $\Omega NS$ the upstream bleed valve is intentionally closed, wherein in case of a drop of the actual speed of the rotor down to a response speed $\Omega RS$ somewhere within the operating range OR the upstream bleed valve is opened partly and wherein in case of a drop of the actual speed to a keep-up speed $\Omega KS$ of the rotor closer to the stall speed $\Omega SS$ the upstream bleed valve is opened up to a pre-defined keep-up position to enable additional flow through the inlet guide vane.

FIG 1

EP 4 071 366 A1

**Description**

The invention relates to method to operate a compressor of a gas turbine. Here the task is to prevent surge in case of a drop of the rotor speed.

Axial compressors comprise a rotor with several rows of rotor blades and opposite fixed at the casing several rows of compressor vanes. Further, the compressor of a gas turbine is usually designed for a certain nominal speed. To enable the operation of the compressor with a different load and also to compensate a change especially of the ambient temperature the front stages of the compressor comprise often variable guide vanes.

During operation of the gas turbine, e.g. the compressor, used to generate electricity by use of a generator, it could happen, that the grid frequency drops. This leads immediately to a reduction of the speed of the rotor of the compressor. If the drop is limited to some percent, it has no further impact to a stable operation of the compressor. But if this goes beyond some percent the danger of a compressor surge occurs. This leads to violent air flow oscillating in the axial direction of a compressor and therefore to an aerodynamic instability. This is a well-known problem for compressors of gas turbines in the state of the art. To avoid surge usually the variable guide vanes are set into a more or full closed position. This is accompanied by a relevant drop of the fluid flow through the compressor and obviously to a drop of the power output of the gas turbine.

Task of the current invention is the prevention against a drop of the power output of the gas turbine in case of a drop of the grid frequency.

The task is solved by an operation method for a compressor according claim 1. Advantageous additions are subject of the dependent claims.

The generic compressor could be used for different purposes and is not limited to its preferred usage within a gas turbine. A gas turbine comprises the compressor at the upstream side and an expansion turbine at the downstream side with a combustion section in-between. Gas turbines are well known from the state of the art and there is no need for further explanation.

The compressor comprises a rotor with several rows of rotor blades. Opposite at a casing serval rows of compressor vanes are arranged. Here, at the upstream side of the compressor a row of inlet guide vanes is arranged followed by at least one row of upstream guide vanes. The compressor could be further divided into a section with at least one row of middle guide vanes and a section with at least one row of downstream guide vanes at the downstream end of the compressor.

Further necessary for the invention is the arrangement of an air extraction between the upstream guide vanes and the middle guide vanes. Here, the flow of air through the air extraction is controllable by a bleed valve.

According to the usage of the compressor the rotor of the compressor has a nominal speed. Further on the abbreviation $\Omega_{NS}$ [rpm] is used. Next, the design of the rotor blades and the compressor vanes leads to a certain stall speed. This is those speed of the rotor of the compressor, where it must be expected, that surge occurs (assuming no other measures are taken to avoid surge). This leads to a breakdown of the flow through the compressor. The abbreviation $\Omega_{SS}$ [rpm] is further used for the stall speed. The range of the speed of the rotor between the stall speed $\Omega_{SS}$ and the nominal speed $\Omega_{NS}$ defines an operating range - shortened with OR.

It is obvious that it is not allowed to run the compressor within the complete operating range down to the stall speed if no counteractions are taken.

During the regular operation of the compressor running at the nominal speed the bleed valve should be closed. An opening of the bleed valve usually leads to a loss of efficiency and should therefore be avoided.

To improve the efficiency of the compressor also in cases where the speed of the rotor drops against the usual measures, inventively an opening of the bleed valve is used.

Here, with a drop of the actual speed of the rotor down to a response speed - shortened with $\Omega_{RS}$ [rpm] - somewhere in-between the stall speed $\Omega_{SS}$ and the nominal speed $\Omega_{NS}$ - thus within the operating range - the bleed valve is opened partly.

As there is no need to react to a small drop of the speed the response speed $\Omega_{RS}$ needs to be lower than the highest 20% of the operating range OR.

Next, it must be avoided, that the reaction to a drop of the actual speed comes too late. Therefore, the response speed $\Omega_{RS}$ needs to be higher than the lowest 20% of the operating range OR.

$$\Omega_{RS} \in (\Omega_{SS} + \{0,2 \ldots 0,8\} \times (\Omega_{NS} - \Omega_{SS}))$$

According to the invention it is further intended, that the bleed valve is opened further if the actual speed drops further from the response speed $\Omega_{RS}$. A certain predefined keep-up position of the bleed valve needs to be achieved if the actual speed drops down to a keep-up speed - abbreviation $\Omega_{KS}$ [rpm] - of the rotor.

It is obvious that the keep-up speed $\Omega_{KS}$ needs to be lower than the response speed $\Omega_{RS}$.

On the other hand, the predefined opening of the bleed valve should be achieved before the actual speed falls to the stall speed $\Omega_{SS}$. Therefore, the keep-up speed $\Omega_{KS}$ needs to be higher than lowest 5% of the operating range OR.

$$\Omega_{KS} \in \{ (\Omega_{SS} + 0,05 \times (\Omega_{NS} - \Omega_{SS})) \ \ldots \ \Omega_{RS}\}$$

Known from the state of the art it was expected that the bleed flow leads to a relevant loss of power within an expansion turbine of a gas turbine. To avoid not acceptable operation situations an enabling of a bleed flow from the compressor was not allowed.

Against the expectations it has been found that a bleed flow from the compressor in cases where the actual rotor speed approaches the critical stall speed will lead to an increase of the inlet mass flow into the first stages of the compressor upstream of the air extraction. Even if the bleed flow eliminates completely the increase of the inlet mass flow downstream of the air extraction still a sufficient mass flow though the compressor could be achieved. This leads to the ability to run for example a gas turbine down to the stall speed and still generate the desired power by the expansion turbine.

An advantageous operation of the compressor could be achieved, if the bleed valve starts to open partly at about the middle of the operating range OR. Here, the response speed $\Omega_{RS}$ should be higher than the lower 30% of the operating range OR but could be preferred lower than the upper 50% of the operating range OR.

$$\Omega_{RS} \in (\Omega_{SS} + \{0,3 \ \ldots \ 0,5\} \times (\Omega_{NS} - \Omega_{SS}))$$

Next, it is advantageous to set the keep-up speed $\Omega_{KS}$ within the lower part of the operating range OR with sufficient distance to the stall speed $\Omega_{SS}$. Here, the keep-up speed $\Omega_{KS}$ should be higher than the lowest 10% of the operating range OR but within the lower 30% of the operating range OR.

$$\Omega_{KS} \in (\Omega_{SS} + \{0,1 \ \ldots \ 0,3\} \times (\Omega_{NS} - \Omega_{SS}))$$

If it comes to the question how to define a preferred dimension and design of the bleed valve two different approaches could be used advantageously.

A first advantageous set-up could be achieved, if running the rotor of the compressor at the keep-up speed $\Omega_{KS}$ with the bleed valve opened into the keep-up position a bleed mass flow through the air extraction is at least 3% of the inlet mass flow. It is particularly advantageous if the bleed flow is at least 5% of the inlet flow. This will lead to the desired effect of an increase of the mass flow through the first stages of the compressor.

On the other hand, the bleed flow should not exceed too much as the further mass flow through the compressor downstream of the air extraction will be reduced too much. Therefore, it is advantageous if the bleed mass flow is at most 15% of the inlet mass flow. It is particular advantageous if the bleed flow is at most 10% of the inlet flow.

A second advantageous set-up could be achieved, if running the rotor of the compressor at the keep-up speed $\Omega_{KS}$ with the bleed valve opened into the keep-up position that the inlet mass flow increases by at least 3% relative to an inlet mass flow when the bleed valve is in a closed position. It is in particular advantageous if the inlet flow increases at least by 5% compared to an inlet flow with the bleed valve closed.

The inventive method could be used with different embodiments of a compressor. But it is further advantageous, if the inlet guide vanes on the upstream side are pivotable and could be set into different angles according to an actual desired power output e.g. of a gas turbine generator. Next it is advantageous if also one or more of the upstream guide vanes upstream of the air extraction are also pivotable.

By using the inventive method, it is - in case of pivotable guide vanes - advantageous to keep the pivotable guide vanes in an full open position or at least within the position the pivotable guide vanes had before the bleed valve starts to open due to a drop of the actual speed.

It is in particular advantageous to apply the inventive method to operate a compressor in particular of a gas turbine in case of high ambient temperatures, e.g. above 30°C.

By the using of the inventive method an operating range of the compressor down to a lower speed than the keep-up speed $\Omega_{KS}$ could be achieved. Along with the extension of the speed range also an increase of the power output of a gas turbine at a lower speed could be achieved.

To verify the expectations of the invention tests have been made where the speed of the rotor was intentionally decreased whereby the inlet mass flow and also the pressures at the inlet and the outlet of the compressor were monitored continuously.

In a first test the speed of the rotor was reduced from a nominal speed $\Omega_{NS}$ of 6600 rpm whereby the bleed valve was closed. This resulted in a stall speed $\Omega_{SS}$ of about 5600 rpm where the inlet mass flow broke down. Analogous the compressor pressure ratio has fallen more or less with the reduction of the speed of the rotor until the stall speed $\Omega_{SS}$ have been reached. There, the pressure ratio drops immediately. Obviously, it is not possible to operate the compressor down to the stall speed $\Omega_{SS}$ without any further measures.

Compared to this in a second test also the speed of the rotor was reduced starting at the nominal speed $\Omega_{NS}$. Against the first test, in this case the inventive method to operate a compressor was used. Here, it has been observed that the inlet mass flow at the keep-up speed $\Omega_{KS}$ has been increased by about 15% relative to the inlet mass flow of the first test. Next it has been observed that the reduction of the compressor pressure radio goes smoothly further also when reducing the speed lower than the stall speed $\Omega_{SS}$.

Consequently, the inventive method to operate a compressor enables the opportunity to reduce the actual speed of the rotor further down than the keep-up speed $\Omega_{KS}$ thereby the effective usable range for the compressor could be increased by the inventive method.

In the following figures a sketch of a compressor and a comparison of the behavior of a compressor with a closed bleed valve and an operation according to the invention is shown.

Fig. 1    shows a cutout of a schematic sketch of a compressor;

Fig. 2    shows a diagram of the inlet mass flow dependent on the speed of the rotor;

Fig. 3    shows a diagram of the compressor pressure ratio dependent on the speed of the rotor.

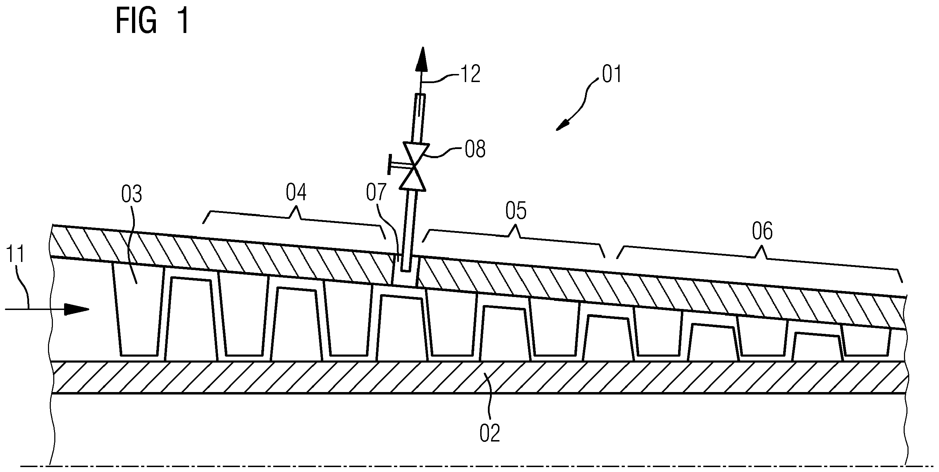

In Fig. 1 a simple schematic sketch of a compressor 01 is shown whereby only an upper part is shown in a principle section cut. The compressor 01 comprises a rotor 02 with a number or rows with compressor blades. Opposite mounted at a casing of the compressor 01 several rows of compressor vanes are arranged. At the upstream side of the compressor 01 a row of inlet guide vanes 03 is arranged. This is followed by further upstream guide vanes 04 - this example with two further rows. In two following rows middle guide vanes 05 are arranged. At the downstream side of the compressor 01 rows of downstream guide vanes 06 are arranged.

Relevant for the current invention is the arrangement of an air extraction 07 at the casing in-between the upstream guide vanes 04 and the middle guide vanes 05. The air extraction 07 is connected with a bleed valve 08.

During operation of the compressor 01 an inlet mass flow 11 passes the inlet guide vane 03 into the compressor 01. In case of a reduction of the actual speed down to the response speed $\Omega_{RS}$ or even further down to the keep-up speed $\Omega_{KS}$ the bleed valve 08 is opened and a bleed flow 12 is extracted through the air extraction 07 from the compressor 01.

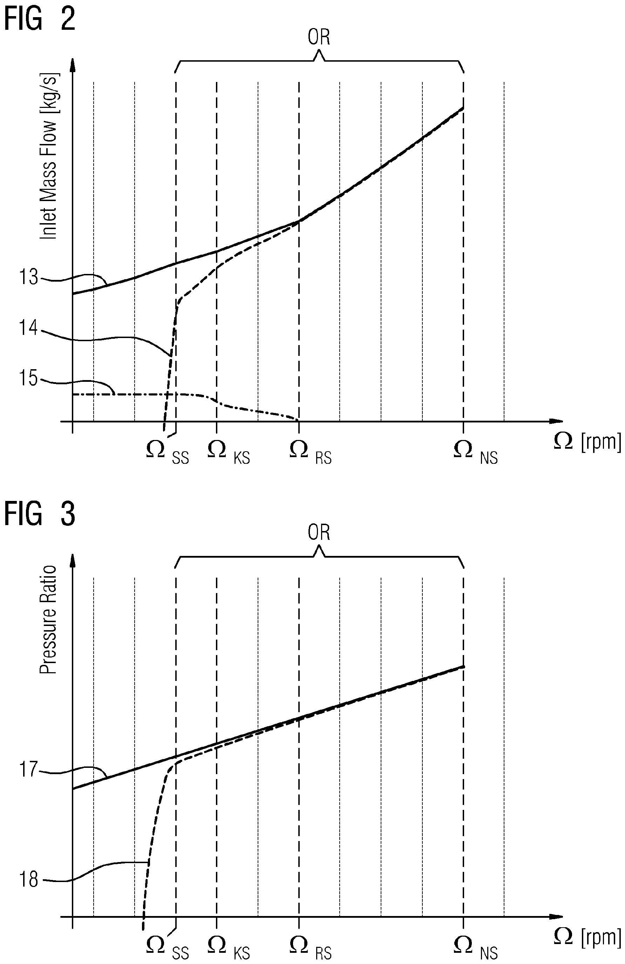

In the Fig. 2 the inlet mass flow [kg/s] is shown dependent on the speed $\Omega$ [rpm] of the rotor 02. Here, a first curve 14 of the inlet mass flow with the bleed valve 08 closed is shown. A second curve 13 describes the course of the inlet mass flow with the operation of the compressor 01 according to the invention and an opening of the bleed valve 08. Both curves 13, 14 start at the nominal speed $\Omega_{NS}$. With a reduction of the actual speed $\Omega$ of the rotor 02 the inlet mass flow falls also.

As result of the first testing procedure with closed bleed valve 08 the inlet mass flow falls smoothly further until the stall speed $\Omega_{SS}$ is reached. But with an excess of the stall speed $\Omega_{SS}$ the inlet mass flow breaks down - as shown with the first curve 14.

Compared to the first testing procedure at a second testing procedure the inventive operation method is applied. When the actual speed $\Omega$ has reached the response speed $\Omega_{RS}$ the bleed valve 08 is opened partly. If the actual speed has reached the keep-up speed $\Omega_{KS}$ the bleed valve 08 is opened up to the keep-up position. As it could be seen from the second curve 13 the inlet mass flow 11 falls further but no breakdown occurs.

In the following Fig. 3 also the result of the behavior of the compressor with a closed bleed valve 08 is shown in a first curve 18 and with an operation of the compressor 01 according to the invention with an opening of the bleed valve 08 is shown with a second curve 17. Here, the compressor pressure ratio is shown in the diagram dependent on the actual speed $\Omega$ of the rotor 02.

Once again, the curves 17, 18 starts at the nominal speed $\Omega_{NS}$ and fall with a decrease of the actual speed $\Omega$. Until the keep-up speed $\Omega_{KS}$ has been reached both curves 17, 18 are very close to each other, so that no effect is visible in that diagram. But if the actual speed $\Omega$ drops further below the stall speed $\Omega_{SS}$ than the pressure ratio shows analog the figure 2 a breakdown of the pressure ratio with the first curve 18 with a closed position of the bleed valve 08. Compared to this no breakdown is visible by using the inventive method as the second curve 17 demonstrates.

**Claims**

1.  Method to operate a compressor, in particular of a gas turbine, comprising a rotor with a number of compressor blades and an inlet guide vane and upstream guide vanes and middle guide vanes and downstream guide vanes and an air extraction, which is arranged between the upstream guide vanes and the middle guide vanes, and a bleed valve, which controls a flow of compressed air from the air extraction, wherein the compressor has a nominal speed $\Omega NS$ of the rotor and a specific stall speed $\Omega SS$ of the rotor according to an expected breakdown of the flow and an operating range OR between the stall speed $\Omega SS$ and the nominal speed $\Omega NS$, wherein at the nominal speed $\Omega NS$ the upstream bleed valve is intentionally closed, wherein in case of a drop of the actual speed of the rotor down to a response speed $\Omega RS$ within a range between 20% and 80% of the operating range OR the upstream bleed valve is opened partly and wherein in case of a drop of the actual speed to a keep-up speed $\Omega KS$ of the rotor within a range between 5% of the operating range OR and the response speed $\Omega RS$ the upstream bleed valve is opened up to a predefined keep-up position.

2.  Method according to claim 1,
    wherein in case of a drop of the actual speed of the rotor down to a response speed $\Omega RS$ within a range between 30% and 50% of the operating range OR the upstream bleed valve is opened at least partly.

3.  Method according to claim 1 or 2,
    wherein in case of a drop of the actual speed to a keep-up speed $\Omega KS$ of the rotor within a range between 10% and 30% of the operating range OR the upstream bleed valve is opened up to a predefined keep-up position.

4.  Method according to one of the claims 1 to 3,
    wherein the bleed valve with the predefined keep-up position is defined in that at the keep-up speed $\Omega KS$ a bleed flow through the bleed valve is at least 3%, in particular at least 5%, and at most 15%, in particular at most 10%, of the inlet flow.

5.  Method according to one of the claims 1 to 4,
    wherein the bleed valve with the predefined keep-up position is defined in that at the keep-up speed $\Omega KS$ an inlet flow increases at least 3%, in particular at least 5%, compared to an inlet flow with closed bleed valve.

6.  Method according to one of the claims 1 to 5,
    wherein the inlet guide vane and/or at least one of the upstream vanes is/are pivotable, and
    wherein the pivotable vane/vanes is/are kept within its position during a drop of actual speed within the operating range OR.

EP 4 071 366 A1

FIG 1

## FIG 2

## FIG 3

Europäisches Patentamt

European Patent Office

Office européen des brevets

# EUROPEAN SEARCH REPORT

Application Number

EP 21 16 6970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/176499 A1 (BALCER LAURENT [FR]) 25 June 2015 (2015-06-25) <br> * paragraph [0005] - paragraph [0006] * <br> * paragraph [0009] * <br> * paragraph [0026] - paragraph [0028] * <br> * figures 1, 2, 4 * | 1-6 | INV. <br> F04D27/02 <br> F04D19/02 <br> F02C9/18 |
| Y | US 2019/203737 A1 (KRISHNABABU SENTHIL [GB]) 4 July 2019 (2019-07-04) <br> * paragraph [0014] * <br> * figure 1 * | 1-6 | |
| Y | US 3 849 020 A (EASTMAN J) 19 November 1974 (1974-11-19) <br> * column 2, line 43 - column 3, line 5 * <br> * column 4, line 5 - column 6, line 2 * <br> * figures 1, 3 * | 1-6 | |
| A | JP 5 142886 B2 (HITACHI LTD) 13 February 2013 (2013-02-13) <br> * abstract * <br> * figure 1 * | 1-6 | |
| A | US 2014/182307 A1 (PONNURAJ BALAKRISHNAN [US] ET AL) 3 July 2014 (2014-07-03) <br> * paragraph [0017] - paragraph [0018] * <br> * figures 1, 2 * | 1-6 | TECHNICAL FIELDS SEARCHED (IPC) <br><br> F04D <br> F02K <br> F02C |
| A | US 2010/158662 A1 (COLOTTE BAPTISTE BENOIT [FR] ET AL) 24 June 2010 (2010-06-24) <br> * paragraph [0085] - paragraph [0089] * <br> * figures 7, 8 * | 1-6 | |

The present search report has been drawn up for all claims

| Place of search | Date of completion of the search | Examiner |
|---|---|---|
| The Hague | 1 September 2021 | Oliveira, Damien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 6970

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2021

| Patent document cited in search report | | Publication date | Patent family member(s) | | Publication date |
|---|---|---|---|---|---|
| US 2015176499 | A1 | 25-06-2015 | FR 3015595 A1<br>US 2015176499 A1 | | 26-06-2015<br>25-06-2015 |
| US 2019203737 | A1 | 04-07-2019 | CA 3036970 A1<br>CN 109715958 A<br>EP 3296573 A1<br>EP 3516240 A1<br>US 2019203737 A1<br>WO 2018054916 A1 | | 29-03-2018<br>03-05-2019<br>21-03-2018<br>31-07-2019<br>04-07-2019<br>29-03-2018 |
| US 3849020 | A | 19-11-1974 | NONE | | |
| JP 5142886 | B2 | 13-02-2013 | JP 5142886 B2<br>JP 2010048213 A | | 13-02-2013<br>04-03-2010 |
| US 2014182307 | A1 | 03-07-2014 | DE 102013114712 A1<br>GB 2512969 A<br>JP 6699981 B2<br>JP 2014139433 A<br>PL 225152 B1<br>US 2014182307 A1 | | 03-07-2014<br>15-10-2014<br>27-05-2020<br>31-07-2014<br>28-02-2017<br>03-07-2014 |
| US 2010158662 | A1 | 24-06-2010 | FR 2936560 A1<br>US 2010158662 A1 | | 02-04-2010<br>24-06-2010 |

EPO FORM P0459

For more details about this annex : see Official Journal of the European Patent Office, No. 12/82